# EUROPEAN PATENT APPLICATION

(11) **EP 4 672 475 A1**
(43) Date of publication of application: **31.12.2025**
(21) Application number: 23926655.4
(22) Date of filing: 10.03.2023
(51) Int. Cl.: H01M 50/457

(54) **SEPARATOR, BATTERY AND ELECTRIC DEVICE**

(71) Applicant: Contemporary Amperex Technology (Hong Kong) Limited, Hong Kong (HK)
(72) Inventor: LING, Yuexia, Ningde, Fujian 352100 (CN); FAN, Yulei, Ningde, Fujian 352100 (CN); LIU, Feng, Ningde, Fujian 352100 (CN); GUAN, Wenhao, Ningde, Fujian 352100 (CN); ZHONG, Wei, Ningde, Fujian 352100 (CN); GE, Xiaoming, Ningde, Fujian 352100 (CN)
(74) Representative: Gong, Jinping
(86) International application number: PCT/CN2023/080663
(87) International publication number: WO 2024/187294

(57) **Abstract**

The present application provides a separator, a battery and an electric device. The separator comprises a porous base material, and a first coating and a second coating which are respectively located on the two surfaces of the porous base material; when the separator is used for a battery, the first coating faces a negative electrode, and the second coating faces a positive electrode; the first coating comprises first particles, the first particles comprise a solid electrolyte, and the content of the first particles in the first coating is greater than 50 wt%; the second coating comprises second particles, the second particles comprise inorganic particles capable of reacting with lithium dendrites, and the content of the second particles in the second coating is greater than 50 wt%.

## Description

### TECHNICAL FIELD

The present application relates to a separator, a battery, and an electric device.

### BACKGROUND

In recent years, batteries have been widely used in energy storage power systems such as hydropower, thermal power, wind power, and solar power stations, as well as in various fields such as consumer electronics, electric tools, electric bicycles, electric motorcycles, electric vehicles, military equipment, and aerospace. With the application and promotion of batteries, their reliability and service life have received more and more attention. During the charging and discharging of batteries, the dendrites on the negative electrode are one of the important reasons affecting the battery reliability and service life. How to slow down the growth of dendrites without affecting the electrochemical and/or dynamics performance of the battery is a technical problem that needs to be solved urgently. The above statements are only used to provide background information related to the present application and do not necessarily constitute the prior art.

### SUMMARY

The present application provides a separator, a battery, and an electric device. The separator can enable the battery to have good cycle performance and dynamics performance.

A first aspect of the present application provides a separator, where the separator includes a porous substrate and a first coating and a second coating respectively located on two surfaces of the porous substrate, where when the separator is used in a battery, the first coating faces a negative electrode and the second coating faces a positive electrode; the first coating includes a first particle, the first particle includes a solid-state electrolyte, and the content of the first particle in the first coating is greater than 50 wt%; the second coating includes a second particle, the second particle includes an inorganic particle capable of reacting with lithium dendrites, and the content of the second particle in the second coating is greater than 50 wt%.

The separator provided in the embodiments of the present application can have good heat resistance, mechanical strength, wettability against electrolytic solution, and ion conductivity, and can effectively reduce the probability of internal short circuits in the battery and can also enable the battery to have good cycle performance and dynamics performance.

In any embodiment of the present application, the content of the first particle in the first coating is greater than or equal to 60 wt%, optionally greater than or equal to 65 wt%, and more optionally 65-85 wt%. This enables the first coating to better promote lithium ion transmission and enable uniform lithium ion flow, thereby helping to reduce the local generation of sharp lithium dendrites, such that the probability of internal short circuits in the battery can be further reduced and the cycle performance and dynamics performance of the battery can be improved.

In any embodiment of the present application, the content of the second particle in the second coating is greater than or equal to 60 wt%, optionally greater than or equal to 65 wt%, and more optionally 65-85 wt%. This enables the second coating to better react with lithium dendrites, consume lithium dendrites in time, and slow down or even prevent further growth of lithium dendrites, thereby further reducing the probability of internal short circuits in the battery and extending the cycle life of the battery.

In any embodiment of the present application, the first coating further includes a third particle.

In any embodiment of the present application, the third particle includes an inorganic particle capable of reacting with lithium dendrites. When the first coating contains a small amount of the inorganic particle capable of reacting with lithium dendrites, the first coating can be allowed to react with lithium dendrites, consume lithium dendrites, and slow down the growth of lithium dendrites without affecting the first coating's effect of promoting lithium ion transmission and enabling uniform lithium ion flow, thereby further reducing the probability of internal short circuits in the battery and enabling the battery to have a longer cycle life.

In any embodiment of the present application, the content of the third particle in the first coating is greater than 0 and less than or equal to 10 wt%, optionally greater than 0 and less than or equal to 5 wt%.

In any embodiment of the present application, the volume distribution particle size Dv50 of the third particle is 0.05-3 µm, optionally 0.1-1 µm.

In any embodiment of the present application, the solid-state electrolyte includes an inorganic solid-state electrolyte. Optionally, the electrical conductivity of the inorganic solid-state electrolyte is greater than or equal to 10⁻⁷ S/cm, more optionally greater than or equal to 10⁻⁴ S/cm.

In any embodiment of the present application, the inorganic solid-state electrolyte includes one or more of an oxide-based inorganic solid-state electrolyte, a sulfide-based inorganic solid-state electrolyte, and a halide-based inorganic solid-state electrolyte.

In any embodiment of the present application, the oxide-based inorganic solid-state electrolyte includes one or more of a NASICON-based solid-state electrolyte, a garnet-based solid-state electrolyte, a perovskite-based solid-state electrolyte, and a LISICON-based solid-state electrolyte.

In any embodiment of the present application, the sulfide-based inorganic solid-state electrolyte includes one or more of a sulfide-based crystalline solid-state electrolyte and a sulfide glass solid-state electrolyte.

In any embodiment of the present application, the inorganic solid-state electrolyte includes one or more of lithium titanium phosphate (LiₓTi_{y}(PO₄)₃, 0 < x < 2, 0 < y < 3), lithium aluminum titanium phosphate (LiₓAl_{y}Ti_{z}(PO₄)₃, LATP, 0 < x < 2, 0 < y < 1, 0 < z < 3), lithium aluminum germanium phosphate (LiₓAl_{y}Ge_{z}(PO₄)₃, LAGP, 0 < x < 2, 0 < y < 1, 0 < z < 3), lithium aluminum zirconium phosphate (LiₓAl_{y}Zr_{z}(PO₄)₃, LAZP, 0 < x < 2, 0 < y < 1, 0 < z < 3), lithium aluminum chromium phosphate (LiₓAl_{y}Cr_{z}(PO₄)₃, LACP, 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium lanthanum zirconium oxide (Li₇La₃Zr₂O₁₂, LLZO), lithium lanthanum thallium oxide (Li₅La₃Ta₂O₁₂, LLTA), lithium zinc germanium oxide (Li₁₄ZnGe₄O₁₆), lithium argyrodite electrolyte Li₆PS₅X (X includes one or more selected from Cl, Br, and I), SiS₂-based glass (LiₓSi_{y}S_{z}, 0 < x < 3, 0 < y < 2, 0 < z < 4), P₂S₅-based glass (LiₓP_{y}S_{z}, 0 < x < 3, 0 < y < 3, 0 < z < 7), Li₃PS₄, Li₇P₃S₁₁, Li₁₀GeP₂S₁₂, and respective doped compounds thereof.

Optionally, the inorganic solid-state electrolyte includes one or more of lithium titanium phosphate (LiₓTi_{y}(PO₄)₃, 0 < x < 2, 0 < y < 3), lithium aluminum titanium phosphate (LiₓAl_{y}Ti_{z}(PO₄)₃, LATP, 0 < x < 2, 0 < y < 1, 0 < z < 3), lithium aluminum germanium phosphate (LiₓAl_{y}Ge_{z}(PO₄)₃, LAGP, 0 < x < 2, 0 < y < 1, 0 < z < 3), lithium aluminum zirconium phosphate (LiₓAl_{y}Zr_{z}(PO₄)₃, LAZP, 0 < x < 2, 0 < y < 1, 0 < z < 3), lithium aluminum chromium phosphate (LiₓAl_{y}Cr_{z}(PO₄)₃, LACP, 0 < x < 2, 0 < y < 1, 0 < z < 3), and respective doped compounds thereof. This can better promote lithium ion transmission and enable uniform lithium ion flow and thereby can result in more uniform lithium deposition and reduce the local generation of sharp lithium dendrites, thereby further reducing the probability of internal short circuits in the battery and improving the cycle performance and dynamics performance of the battery.

In any embodiment of the present application, the inorganic particle capable of reacting with lithium dendrites includes an inorganic ceramic particle.

In any embodiment of the present application, the inorganic ceramic includes one or more of aluminum oxide, silicon dioxide, silicon(II) oxide, ferric oxide, triiron tetraoxide, cobalt monoxide, tricobalt tetroxide, tin monoxide, tin dioxide, nickel oxide, iron phosphate, copper oxide, titanium oxide, zirconium oxide, barium oxide, calcium oxide, magnesium oxide, aluminum nitride, silicon nitride, boron nitride, zirconium titanate, barium titanate, and respective modified materials thereof; optionally, the inorganic ceramic includes one or more of aluminum oxide, silicon dioxide, silicon(II) oxide, cobalt monoxide, tricobalt tetroxide, tin monoxide, tin dioxide, nickel oxide, iron phosphate, copper oxide, titanium oxide, and respective modified materials thereof. This can enable better reaction with lithium dendrites, consumption of lithium dendrites in time, and slowing down or even prevention of further growth of lithium dendrites, thereby further reducing the probability of internal short circuits in the battery and extending the cycle life of the battery.

In any embodiment of the present application, the volume distribution particle size Dv50 of the first particle is 0.05-3 µm, optionally 0.1-1 µm. When the volume distribution particle size Dv50 of the first particle is within the above range, the first particle can better promote lithium ion transmission and enable uniform lithium ion flow and can better slow down or even inhibit the growth of lithium dendrites.

In any embodiment of the present application, the volume distribution particle size Dv50 of the second particle is 0.5-5 µm, optionally 1-3 µm. When the volume distribution particle size Dv50 of the second particle is within the above range, the second particle can better react with lithium dendrites, consume lithium dendrites in time, and prevent the further growth of lithium dendrites.

In any embodiment of the present application, the first coating further includes one or more of a first binder, a first dispersant, and a first thickener.

In any embodiment of the present application, the mass ratio of the first particle to the first binder is 100:(1-25), optionally 100:(5-22). An appropriate amount of first binder can improve the heat resistance and uniformity of the first coating and can effectively avoid problems such as powder drop, and also can enable the separator to have good ion conductivity.

In any embodiment of the present application, the mass ratio of the first particle to the first dispersant is 100:(1.0-3.5), optionally 100:(1.2-2.5). An appropriate amount of first dispersant can make the slurry dispersed uniformly, which is beneficial for coating and also helps to improve the film quality of the first coating.

In any embodiment of the present application, the mass ratio of the first particle to the first thickener is 100:(10-30), optionally 100:(12-26). An appropriate amount of first thickener can improve the stability of the slurry, which is beneficial for coating and also helps to improve the film quality of the first coating.

In any embodiment of the present application, the first binder includes one or more of a vinylidene fluoride homopolymer and/or copolymer, sodium carboxymethylcellulose, and styrene-butadiene rubber.

In any embodiment of the present application, the first dispersant includes one or more of hydrolyzed polymaleic anhydride, polyacrylic acid, an acrylic block copolymer, a polyester block copolymer, a polyethylene glycol polyol, polyethyleneimine, and respective derivatives thereof.

In any embodiment of the present application, the first thickener includes one or more of sodium hydroxymethylcellulose, methyl cellulose, hydroxyethyl cellulose, hydroxypropyl methyl cellulose, polyacrylate, polyurethane, and polyether.

In any embodiment of the present application, the second coating further includes one or more of a second binder, a second dispersant, and a second thickener.

In any embodiment of the present application, the mass ratio of the second particle to the second binder is 100:(1-25), optionally 100:(8-22). An appropriate amount of second binder can improve the heat resistance and uniformity of the second coating and can effectively avoid problems such as powder drop, and also can enable the separator to have good ion conductivity.

In any embodiment of the present application, the mass ratio of the second particle to the second dispersant is 100:(0.5-4.0), optionally 100:(1.0-2.0). An appropriate amount of second dispersant can make the slurry dispersed uniformly, which is beneficial for coating and also helps to improve the film quality of the second coating.

In any embodiment of the present application, the mass ratio of the second particle to the second thickener is 100:(5-30), optionally 100:(10-25). An appropriate amount of second thickener can improve the stability of the slurry, which is beneficial for coating and also helps to improve the film quality of the second coating.

In any embodiment of the present application, the second binder includes one or more of a vinylidene fluoride homopolymer and/or copolymer, sodium carboxymethylcellulose, and styrene-butadiene rubber.

In any embodiment of the present application, the second dispersant includes one or more of hydrolyzed polymaleic anhydride, polyacrylic acid, an acrylic block copolymer, a polyester block copolymer, a polyethylene glycol polyol, polyethyleneimine, and respective derivatives thereof.

In any embodiment of the present application, the second thickener includes one or more of sodium hydroxymethylcellulose, methyl cellulose, hydroxyethyl cellulose, hydroxypropyl methyl cellulose, polyacrylate, polyurethane, and polyether.

In any embodiment of the present application, the surface density of the first coating is 9-12 g/m², optionally 10-11.5 g/m². When the surface density of the first coating is within the above range, a dense and uniform intermediate layer can be formed on the surface of the separator, which can better promote lithium ion transmission and enable uniform lithium ion flow; also, the separator can have low internal resistance, short lithium ion transmission path and high lithium ion transmission rate, thereby enabling the battery to have both good cycle performance and good dynamics performance.

In any embodiment of the present application, the surface density of the second coating is 4-14 g/m², optionally 8-12 g/m². When the surface density of the second coating is within the above range, the second coating can better react with lithium dendrites, consume lithium dendrites in time, and prevent the further growth of lithium dendrites; also, the separator can have low internal resistance, short lithium ion transmission path and high lithium ion transmission rate, thereby enabling the battery to have both good cycle performance and good dynamics performance.

In any embodiment of the present application, the ratio of the thickness of the first coating to the thickness of the second coating is (0.2-5):1, optionally (0.25-4):1. As such, the effects of the first coating and the second coating can be better exerted, the first coating can better promote lithium ion transmission and enable uniform lithium ion flow, and the second coating can better react with lithium dendrites, consume lithium dendrites in time, and slow down or even prevent further growth of lithium dendrites. This can further reduce the probability of internal short circuits in the battery and extend the cycle life of the battery.

In any embodiment of the present application, the thickness of the first coating is 1-7 µm, optionally 1.5-6 µm. When the thickness of the first coating is within the above range, a dense and uniform intermediate layer can be formed on the surface of the separator, which can better promote lithium ion transmission and enable uniform lithium ion flow; also, the separator can have low internal resistance, short lithium ion transmission path and high lithium ion transmission rate, thereby enabling the battery to have both good cycle performance and good dynamics performance.

In any embodiment of the present application, the thickness of the second coating is 1-7 µm, optionally 1.5-6 µm. When the thickness of the second coating is within the above range, the second coating can better react with lithium dendrites, consume lithium dendrites in time, and prevent the further growth of lithium dendrites; also, the separator can have low internal resistance, short lithium ion transmission path and high lithium ion transmission rate, thereby enabling the battery to have both good cycle performance and good dynamics performance.

In any embodiment of the present application, the total thickness of the separator is 8-25 µm, optionally 8-18 µm. As such, the separator can have low internal resistance, short lithium ion transmission path and high lithium ion transmission rate, thus enabling the battery to have both good cycle performance and good dynamics performance.

In any embodiment of the present application, the porous substrate includes one or more of polyolefin, halogenated polyolefin, polyamide, polyester, and respective derivatives thereof.

In any embodiment of the present application, the thickness of the porous substrate is 4-15 µm, optionally 5-10 µm.

In any embodiment of the present application, the porosity of the separator is 40%-80%, optionally 45%-70%.

In any embodiment of the present application, the transverse tensile strength of the separator is 1000-1500 kgf/cm², optionally 1100-1300 kgf/cm².

In any embodiment of the present application, the peel strength between the first coating and the porous substrate of the separator is 8.9-13.2 N/m, optionally 9.1-11.8 N/m.

In any embodiment of the present application, the peel strength between the second coating and the porous substrate of the separator is 12.9-20.6 N/m, optionally 13.5-17.8 N/m.

In any embodiment of the present application, the puncture strength of the separator is 9.60-11.50 N•µm⁻¹, optionally 9.80-10.90 N•µm⁻¹.

In any embodiment of the present application, the ionic conductivity of the separator at 25 °C is 1.40-2.50 mS•cm⁻¹, optionally 1.60-2.15 mS•cm⁻¹.

A second aspect of the present application provides a battery including a battery cell and a case, where the battery cell includes a positive electrode plate, a negative electrode plate, and the separator according to the first aspect of the present application, the first coating of the separator faces the negative electrode plate, and the second coating of the separator faces the positive electrode plate.

In any embodiment of the present application, the battery cell includes at least one of a lithium-ion battery cell, a lithium metal battery cell, an anode-free lithium metal battery cell, a lithium-sulfur battery cell, and a lithium-air battery cell.

A third aspect of the present application provides an electric device, which includes the battery according to the second aspect of the present application.

The electric device of the present application includes the battery provided by the present application and thus has at least the same advantages as the battery.

### BRIEF DESCRIPTION OF THE DRAWINGS

In order to more clearly illustrate the technical solutions of the embodiments of the present application, the drawings required to be used in the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic diagram of one embodiment of a battery cell of the present application.
FIG. 2 is a schematic exploded view of one embodiment of a battery cell of the present application.
FIG. 3 is a schematic diagram of one embodiment of a battery module of the present application.
FIG. 4 is a schematic diagram of one embodiment of a battery pack of the present application.
FIG. 5 is a schematic exploded view of the embodiment of the battery pack shown in FIG. 4.
FIG. 6 is a schematic diagram of one embodiment of a separator of the present application.
FIG. 7 is a schematic diagram of one embodiment of an electric device including the battery of the present application as a power source.

The drawings are not necessarily to scale. The reference numerals are as follows: 1 battery pack, 2 upper case, 3 lower case, 4 battery module, 5 battery cell, 51 housing, 52 electrode assembly, 53 cover plate, 10 separator, 101 porous substrate, 102 first coating, 103 second coating.

### DETAILED DESCRIPTION

Hereinafter, embodiments of the separator, the battery, and the electric device of the present application are specifically disclosed in detail with appropriate reference to the drawings. However, unnecessary detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b).

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, in the present application, the terms "first", "second", "third", and the like are used to distinguish different objects and are not intended to describe a specific order or priority.

Unless otherwise specified, the terms used in the present application have the well-known meanings that are commonly understood by those skilled in the art.

Unless otherwise specified, the values of the parameters mentioned in the present application can be measured by various test methods commonly used in the art. For example, they can be measured according to the test methods given in the examples of the present application. Unless otherwise specified, all parameters are tested at 25 °C.

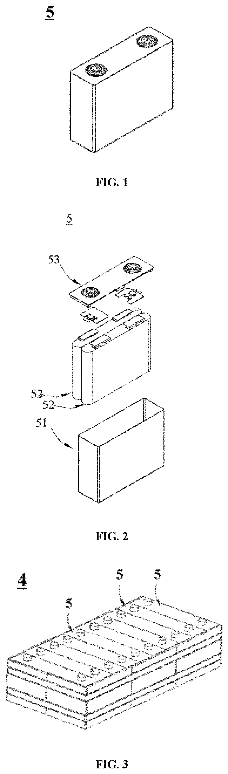

The battery mentioned in embodiments of the present application refers to a single physical module including one or more battery cells to provide higher voltage and capacity. For example, the battery mentioned in the present application may include a battery cell, a battery module, a battery pack, or the like. A battery cell is the smallest unit forming a battery and can independently realize the functions of charging and discharging. The present application does not particularly limit the shape of the battery cell, and it may have a cylindrical shape, a rectangular parallelepiped shape, or any other shape. FIG. 1 shows a battery cell 5 having a rectangular parallelepiped structure as one example. A plurality of battery cells may be connected in series, in parallel, or in series-parallel. The series-parallel connection refers to a mixture of series connection and parallel connection. In the embodiments of the present application, a plurality of battery cells may be directly assembled into a battery pack, or may be first assembled into a battery module, which may then be assembled into a battery pack.

A battery generally includes a case used for encapsulating one or more battery cells. The case can prevent liquid or other foreign matters from affecting the charging or discharging of the battery cells. The case may be of a simple three-dimensional structure such as a single rectangular parallelepiped, cylinder, or sphere, or may also be of a complex three-dimensional structure composed of simple three-dimensional structures such as a rectangular parallelepiped, a cylinder, or a sphere, which is not limited in the embodiments of the present application. The case may be made of an alloy material such as aluminum alloy and iron alloy, or a polymer material such as polycarbonate and polyisocyanurate foam plastic, or a composite material such as glass fiber plus epoxy resin, which is not limited in the embodiments of the present application.

The battery cell mentioned in the embodiments of the present application may be at least one of a lithium-ion battery cell, a lithium metal battery cell, an anode-free lithium metal battery cell, a lithium-sulfur battery cell, and a lithium-air battery cell.

The battery cell provided in the embodiments of the present application includes an electrode assembly and an electrolytic solution. The electrode assembly includes a positive electrode plate, a negative electrode plate, and a separator located between the positive electrode plate and the negative electrode plate. The electrode assembly may be of a winding structure or a stacking structure, which is not limited in the embodiments of the present application.

The battery cell also includes an outer packaging. The outer packaging can be used for packaging the electrode assembly and electrolytic solution described above. The outer packaging may be a hard shell, such as a hard plastic shell, an aluminum shell, or a steel shell. The outer packaging may also be a soft pack, such as a pouch-type soft pack. The soft pack may be made of plastic, such as one or more of polypropylene (PP), polybutylene terephthalate (PBT), and polybutylene succinate (PBS).

As shown in FIG. 2, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is configured for lidding the opening to close the accommodating cavity. The electrode assembly 52 is packaged in the accommodating cavity. The number of electrode assemblies 52 included in the battery cell 5 may be one or more and may be adjusted as needed.

The battery cells may be assembled into a battery module; the number of the battery cells included in the battery module may be more than one, and the specific number may be adjusted based on the use and capacity of the battery module. FIG. 3 is a schematic diagram of a battery module 4 as one example. As shown in FIG. 3, in the battery module 4, a plurality of battery cells 5 may be sequentially arranged in a length direction of the battery module 4. Certainly, the arrangement may also be in any other manner. Further, the plurality of battery cells 5 may be fixed by a fastener.

The battery module 4 may further include a shell having an accommodation space in which the plurality of battery cells 5 are accommodated.

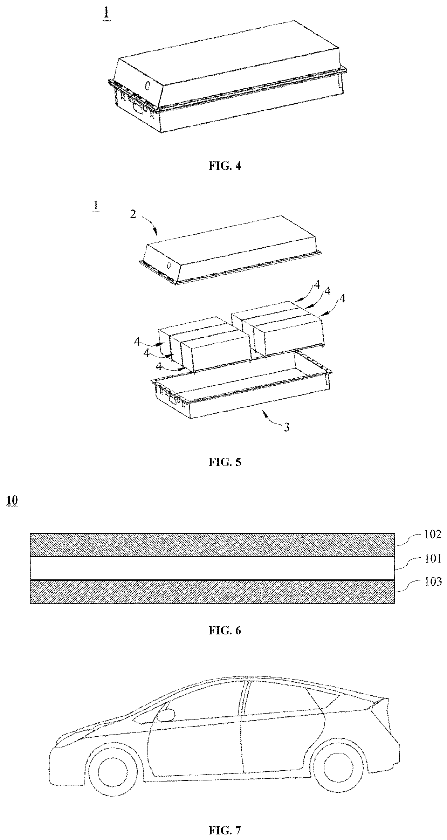

The above battery module may be assembled into a battery pack; the number of the battery modules included in the battery pack may be adjusted based on the use and capacity of the battery pack. FIG. 4 and FIG. 5 are schematic diagrams of a battery pack 1 as one example. As shown in FIG. 4 and FIG. 5, the battery pack 1 may include a case and a plurality of battery modules 4 disposed in the case. The case includes an upper case 2 and a lower case 3. The upper case 2 is configured for lidding the lower case 3 to form a closed space for accommodating the battery modules 4. The plurality of battery modules 4 may be arranged in any manner in the case.

As an important component of the battery cell, the performance of the separator is crucial to the performance of the battery. The separator is located between the positive electrode plate and the negative electrode plate, and its main function is to prevent short circuits. The separators currently used in commercial batteries are usually polyolefin (such as polyethylene, polypropylene) porous films. However, such separators have poor wettability against electrolytic solution and poor thermal stability. In addition, as the number of battery charging and discharging cycles increases, some lithium dendrites will form at the negative electrode interface. The continuous growth of lithium dendrites will puncture the separator, causing internal short circuits, and in severe cases, even safety accidents such as combustion and explosion may occur.

Therefore, developing a separator with good thermal stability, excellent wettability against electrolytic solution, and high reliability is a technical problem that needs to be solved urgently in this field.

In view of this, the inventors have improved the separator.

FIG. 6 is a schematic diagram of one embodiment of a separator of the present application.

As shown in FIG. 6, a separator 10 includes a porous substrate 101 and a first coating 102 and a second coating 103 respectively located on two surfaces of the porous substrate 101. When the separator is used in a battery, the first coating 102 faces the negative electrode and the second coating 103 faces the positive electrode. The first coating 102 includes a first particle, the first particle includes a solid-state electrolyte, and the content of the first particle in the first coating is greater than 50 wt%; the second coating 102 includes a second particle, the second particle includes an inorganic particle capable of reacting with lithium dendrites, and the content of the second particle in the second coating is greater than 50 wt%.

The first coating mainly includes a solid-state electrolyte. The solid-state electrolyte itself has high ionic conductivity and low electronic conductivity, so it has good ionic conduction and electronic insulation. When used for the first coating, the solid-state electrolyte will not significantly increase the impedance of the separator and can also reduce the transfer of electrons through the separator. In addition, the first coating faces the negative electrode and can form a dense and uniform intermediate layer on the surface of the separator, which can promote lithium ion transmission and enable uniform lithium ion flow and thereby induce uniform lithium deposition, slow down or even inhibit the growth of lithium dendrites, and effectively reduce the local generation of sharp lithium dendrites, thereby reducing or even avoiding the problem of internal short circuits in the battery due to lithium dendrites puncturing the separator.

The second coating faces the positive electrode and mainly includes an inorganic particle capable of reacting with lithium dendrites. Therefore, when the lithium dendrites generated on the surface of the negative electrode puncture the porous substrate during repeated charging and discharging, the second coating can react with the lithium dendrites, consume the lithium dendrites in time, and prevent the further growth of the lithium dendrites, thereby reducing or even avoiding the problem of internal short circuits in the battery resulting from the contact of lithium dendrites with the positive electrode.

The first coating and the second coating are respectively located on two sides of the porous substrate, and there is no interface between the first coating and the second coating in the separator. Since the ionic conductivity of the first particle is different from that of the second particle, when the first coating and the second coating are located on the same side of the porous substrate, the concentrations of lithium ions at the interface between the first coating and the second coating are different. The inventors noticed that when the concentration difference at the interface is too large, it is easy to cause the formation of lithium dendrites, which in turn increases the probability of internal short circuits in the battery and reduces the service life of the battery. In the separator provided by the embodiments of the present application, there is no interface between the first coating and the second coating, thereby avoiding the problem of the formation of lithium dendrites due to too large concentration difference at the interface.

The porous substrate is highly hydrophobic, while the electrolytic solution is usually a polar solvent, which results in poor wettability against electrolytic solution and high ion transfer impedance of the porous substrate. The first coating and the second coating introduced into the separator provided in the embodiments of the present application have good compatibility with the electrolytic solution, which can improve the wettability of the separator against the electrolytic solution and reduce the ion transfer impedance of the separator, thereby enabling the battery to have good cycle performance and dynamics performance. In addition, the first coating and the second coating introduced into the separator provided in the embodiments of the present application can also improve the heat resistance and mechanical strength of the separator.

Therefore, the separator provided in the embodiments of the present application can have good heat resistance, mechanical strength, wettability against electrolytic solution, and ion conductivity, and can effectively reduce the probability of internal short circuits in the battery and can also enable the battery to have good cycle performance and dynamics performance.

In the first coating, the first particle includes a solid-state electrolyte, and the content of the first particle is greater than 50 wt%. Allowing the first coating to mainly include a solid-state electrolyte can promote lithium ion transmission and enable uniform lithium ion flow and thereby can result in more uniform lithium deposition and reduce the local generation of sharp lithium dendrites, thereby reducing the probability of internal short circuits in the battery and meanwhile enabling the battery to have good cycle performance and dynamics performance. However, when the content of the solid-state electrolyte in the first coating is too low, its effect of promoting lithium ion transmission and uniform lithium ion flow is poor, and thus the effect of slowing down the growth of lithium dendrites is poor, the probability of internal short circuits in the battery is high, and the cycle life of the battery is not good enough.

In some embodiments, the content of the first particle in the first coating may be greater than or equal to 60 wt%, optionally greater than or equal to 65 wt%, and more optionally greater than or equal to 68 wt%. This enables the first coating to better promote lithium ion transmission and enable uniform lithium ion flow, thereby helping to reduce the local generation of sharp lithium dendrites, such that the probability of internal short circuits in the battery can be further reduced and the cycle performance and dynamics performance of the battery can be improved. For example, the content of the first particle in the first coating may be 55-90 wt%, 58-90 wt%, 60-90 wt%, 62-90 wt%, 65-90 wt%, 68-90 wt%, 55-88 wt%, 58-88 wt%, 60-88 wt%, 62-88 wt%, 65-88 wt%, 68-88 wt%, 55-85 wt%, 58-85 wt%, 60-85 wt%, 62-85 wt%, 65-85 wt%, 68-85 wt%, 55-82 wt%, 58-82 wt%, 60-82 wt%, 62-82 wt%, 65-82 wt%, or 68-82 wt%.

In the second coating, the second particle includes an inorganic particle capable of reacting with lithium dendrites, and the content of the second particle is greater than 50 wt%. Allowing the second coating to mainly include an inorganic particle capable of reacting with lithium dendrites can enable the second coating to consume lithium dendrites in time, reduce the problem of internal short circuits in the battery resulting from the contact of lithium dendrites with the positive electrode caused by the further growth of lithium dendrites, and thereby reduce the probability of internal short circuits in the battery and extend the cycle life of the battery. However, when the content of the inorganic particle capable of reacting with lithium dendrites is low, the second coating cannot consume the lithium dendrites in time, such that the lithium dendrites may puncture the separator and cause internal short circuits in the battery, and the cycle life of the battery is not good enough.

In some embodiments, the content of the second particle in the second coating may be greater than or equal to 60 wt%, optionally greater than or equal to 65 wt%, and optionally greater than or equal to 68 wt%. This enables the second coating to better react with lithium dendrites, consume lithium dendrites in time, and slow down or even prevent further growth of lithium dendrites, thereby further reducing the probability of internal short circuits in the battery and extending the cycle life of the battery. For example, the content of the second particle in the second coating may be 55-90 wt%, 58-90 wt%, 60-90 wt%, 62-90 wt%, 65-90 wt%, 55-88 wt%, 58-88 wt%, 68-90 wt%, 60-88 wt%, 62-88 wt%, 65-88 wt%, 68-88 wt%, 55-85 wt%, 58-85 wt%, 60-85 wt%, 62-85 wt%, 65-85 wt%, 68-85 wt%, 55-82 wt%, 58-82 wt%, 60-82 wt%, 62-82 wt%, 65-82 wt%, or 68-82 wt%.

In some embodiments, the solid-state electrolyte may include an inorganic solid-state electrolyte. Optionally, the electrical conductivity of the inorganic solid-state electrolyte may be greater than or equal to 10⁻⁷ S/cm, and more optionally greater than or equal to 10⁻⁴ S/cm.

In some embodiments, the inorganic solid-state electrolyte may include one or more of an oxide-based inorganic solid-state electrolyte, a sulfide-based inorganic solid-state electrolyte, and a halide-based inorganic solid-state electrolyte.

In some embodiments, the oxide-based inorganic solid-state electrolyte may include one or more of a NASICON-based solid-state electrolyte, a garnet-based solid-state electrolyte, a perovskite-based solid-state electrolyte, and a LISICON-based solid-state electrolyte, and may optionally include a NASICON-based solid-state electrolyte. The NASICON-based solid-state electrolyte has the advantages of high electrical conductivity and wide electrochemical window, which can better promote lithium ion transmission and enable uniform lithium ion flow and thereby can result in more uniform lithium deposition and reduce the local generation of sharp lithium dendrites, thereby further reducing the probability of internal short circuits in the battery and improving the cycle performance and dynamics performance of the battery.

In some embodiments, the sulfide-based inorganic solid-state electrolyte may include one or more of a sulfide-based crystalline solid-state electrolyte and a sulfide glass solid-state electrolyte.

As an example, the inorganic solid-state electrolyte may include one or more of lithium titanium phosphate (LiₓTi_{y}(PO₄)₃, 0 < x < 2, 0 < y < 3), lithium aluminum titanium phosphate (LiₓAl_{y}Ti_{z}(PO₄)₃, LATP, 0 < x < 2, 0 < y < 1, 0 < z < 3), lithium aluminum germanium phosphate (LiₓAl_{y}Ge_{z}(PO₄)₃, LAGP, 0 < x < 2, 0 < y < 1, 0 < z < 3), lithium aluminum zirconium phosphate (LiₓAl_{y}Zr_{z}(PO₄)₃, LAZP, 0 < x < 2, 0 < y < 1, 0 < z < 3), lithium aluminum chromium phosphate (LiₓAl_{y}Cr_{z}(PO₄)₃, LACP, 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium lanthanum zirconium oxide (Li₇La₃Zr₂O₁₂, LLZO), lithium lanthanum thallium oxide (Li₅La₃Ta₂O₁₂, LLTA), lithium zinc germanium oxide (Li₁₄ZnGe₄O₁₆), lithium argyrodite electrolyte Li₆PS₅X (X includes one or more selected from Cl, Br, and I), SiS₂-based glass (LiₓSi_{y}S_{z}, 0 < x < 3, 0 < y < 2, 0 < z < 4), P₂S₅-based glass (LiₓP_{y}S_{z}, 0 < x < 3, 0 < y < 3, 0 < z < 7), Li₃PS₄, Li₇P₃S₁₁, Li₁₀GeP₂S₁₂, and respective doped compounds thereof. Optionally, the inorganic solid-state electrolyte may include one or more of lithium titanium phosphate (LiₓTi_{y}(PO₄)₃, 0 < x < 2, 0 < y < 3), lithium aluminum titanium phosphate (LiₓAl_{y}Ti_{z}(PO₄)₃, LATP, 0 < x < 2, 0 < y < 1, 0 < z < 3), lithium aluminum germanium phosphate (LiₓAl_{y}Ge_{z}(PO₄)₃, LAGP, 0 < x < 2, 0 < y < 1, 0 < z < 3), lithium aluminum zirconium phosphate (LiₓAl_{y}Zr_{z}(PO₄)₃, LAZP, 0 < x < 2, 0 < y < 1, 0 < z < 3), lithium aluminum chromium phosphate (LiₓAl_{y}Cr₂(PO₄)₃, LACP, 0 < x < 2, 0 < y < 1, 0 < z < 3), and respective doped compounds thereof. This can better promote lithium ion transmission and enable uniform lithium ion flow and thereby can result in more uniform lithium deposition and reduce the local generation of sharp lithium dendrites, thereby further reducing the probability of internal short circuits in the battery and improving the cycle performance and dynamics performance of the battery.

Doped compounds are usually products obtained by doping other elements, such as metal elements, in compounds. The types of doping elements are not particularly limited as long as they do not damage the main purpose of the present application.

For example, lithium titanium phosphate may include LiTi₂(PO₄)₃, lithium aluminum titanium phosphate may include Li_{1.3}Al_{0.3}Ti_{1.7}(PO₄)₃, lithium aluminum germanium phosphate may include Li_{1.5}Al_{0.5}Ge_{1.5}(PO₄)₃, lithium lanthanum titanate may include Li_{0.5}La_{0.5}TiO₃, and lithium argyrodite electrolyte Li₆PS₅X may include Li₆PS₅Cl and Li₆PS₅Br.

In some embodiments, the inorganic particle capable of reacting with lithium dendrites may include an inorganic ceramic particle.

In some embodiments, the inorganic ceramic may include one or more of aluminum oxide, silicon dioxide, silicon(II) oxide, ferric oxide, triiron tetraoxide, cobalt monoxide, tricobalt tetroxide, tin monoxide, tin dioxide, nickel oxide, iron phosphate, copper oxide, titanium oxide, zirconium oxide, barium oxide, calcium oxide, magnesium oxide, aluminum nitride, silicon nitride, boron nitride, zirconium titanate, barium titanate, and respective modified materials thereof.

Optionally, the inorganic ceramic may include one or more of aluminum oxide, silicon dioxide, silicon(II) oxide, cobalt monoxide, tricobalt tetroxide, tin monoxide, tin dioxide, nickel oxide, iron phosphate, copper oxide, titanium oxide, and respective modified materials thereof. This can enable better reaction with lithium dendrites, consumption of lithium dendrites in time, and slowing down or even prevention of further growth of lithium dendrites, thereby further reducing the probability of internal short circuits in the battery and extending the cycle life of the battery.

The modification methods include physical modification and/or chemical modification. Chemical modification includes coupling agent modification (such as using a silane coupling agent, a titanate coupling agent, etc.), surfactant modification, polymer grafting modification, etc. Physical modification includes mechanical dispersion, ultrasonic dispersion, high energy treatment, etc.

In some embodiments, the volume distribution particle size Dv50 of the first particle may be 0.05-3 µm, optionally 0.05-2 µm, 0.08-2 µm, 0.1-2 µm, or 0.1-1 µm.

When the volume distribution particle size Dv50 of the first particle is within the above range, the first particle can better promote lithium ion transmission and enable uniform lithium ion flow and can better slow down or even inhibit the growth of lithium dendrites. Besides, the following situations can be effectively avoided: when the particle size of the first particle is too large, the viscosity of the slurry is relatively large and the uniformity cannot be guaranteed, making it difficult to uniformly coat the porous substrate, and during the coating, it is difficult for the first particle to adhere to the surface of the porous substrate, and powder drop is likely to occur, resulting in poor coating effect and also affecting the electrochemical performance of the battery; when the particle size of the first particle is too small, the first particle can more easily enter the pores of the porous substrate during the coating, which not only reduces the air permeability of the separator, but also hinders the transmission of lithium ions, thereby increasing the capacity loss of the battery and shortening the cycle life of the battery.

In some embodiments, the volume distribution particle size Dv50 of the second particle may be 0.5-5 µm, optionally 0.5-4 µm, 0.8-4 µm, or 1-3 µm.

When the volume distribution particle size Dv50 of the second particle is within the above range, the second particle can better react with lithium dendrites, consume lithium dendrites in time, and prevent the further growth of lithium dendrites. Besides, the following situations can be effectively avoided: when the particle size of the second particle is too large, the viscosity of the slurry is relatively large and the uniformity cannot be guaranteed, making it difficult to uniformly coat the porous substrate, and during the coating, it is difficult for the second particle to adhere to the surface of the porous substrate, and powder drop is likely to occur, resulting in poor coating effect and also affecting the electrochemical performance of the battery; when the particle size of the second particle is too small, the second particle can more easily enter the pores of the porous substrate during the coating, which not only reduces the air permeability of the separator, but also makes the second coating lose the effect of eliminating lithium dendrites, thereby increasing the capacity loss of the battery and shortening the cycle life of the battery.

In some embodiments, the first coating may further include a third particle. Optionally, the content of the third particle in the first coating may be greater than 0 and less than or equal to 10 wt%, optionally greater than 0 and less than or equal to 5 wt%.

In some embodiments, the third particle may include an inorganic particle capable of reacting with lithium dendrites. When the first coating contains a small amount of the inorganic particle capable of reacting with lithium dendrites, the first coating can be allowed to react with lithium dendrites, consume lithium dendrites, and slow down the growth of lithium dendrites without affecting the first coating's effect of promoting lithium ion transmission and enabling uniform lithium ion flow, thereby further reducing the probability of internal short circuits in the battery and enabling the battery to have a longer cycle life.

In some embodiments, the volume distribution particle size Dv50 of the third particle may be 0.05-3 µm, optionally 0.1-1 µm.

In some embodiments, the ratio of the thickness of the first coating to the thickness of the second coating may be (0.2-5):1, optionally (0.25-4):1. As such, the effects of the first coating and the second coating can be better exerted, the first coating can better promote lithium ion transmission and enable uniform lithium ion flow, and the second coating can better react with lithium dendrites, consume lithium dendrites in time, and slow down or even prevent further growth of lithium dendrites, thereby further reducing the probability of internal short circuits in the battery and extending the cycle life of the battery.

In some embodiments, the first coating may further include a first binder. The present application does not particularly limit the type of the first binder. As an example, the first binder may include, but is not limited to, one or more of a vinylidene fluoride homopolymer (PVDF) and/or copolymer, sodium carboxymethylcellulose, and styrene-butadiene rubber.

In some embodiments, the mass ratio of the first particle to the first binder may be 100:(1-25), optionally 100:(5-22). An appropriate amount of first binder can improve the heat resistance and uniformity of the first coating and can effectively avoid problems such as powder drop, and also can enable the separator to have good ion conductivity.

In some embodiments, the first coating may further include a first dispersant. The present application does not particularly limit the type of the first dispersant. As an example, the first dispersant may include, but is not limited to, one or more of hydrolyzed polymaleic anhydride, polyacrylic acid, an acrylic block copolymer, a polyester block copolymer, a polyethylene glycol polyol, polyethyleneimine, and respective derivatives thereof. Derivatives usually refer to products derived from the replacement of hydrogen atoms or atomic groups in a polymer by other atoms or atomic groups.

In some embodiments, the mass ratio of the first particle to the first dispersant may be 100:(1.0-3.5), optionally 100:(1.2-2.5). An appropriate amount of first dispersant can make the slurry dispersed uniformly, which is beneficial for coating and also helps to improve the film quality of the first coating.

In some embodiments, the first coating may further include a first thickener. The present application does not particularly limit the type of the first thickener. As an example, the first thickener may include, but is not limited to, one or more of sodium hydroxymethylcellulose, methyl cellulose, hydroxyethyl cellulose, hydroxypropyl methyl cellulose, polyacrylate, polyurethane, and polyether.

In some embodiments, the mass ratio of the first particle to the first thickener may be 100:(10-30), optionally 100:(12-26). An appropriate amount of first thickener can improve the stability of the slurry, which is beneficial for coating and also helps to improve the film quality of the first coating.

In some embodiments, the thickness of the first coating may be 1-7 µm, optionally 1.5-6 µm. When the thickness of the first coating is within the above range, a dense and uniform intermediate layer can be formed on the surface of the separator, which can better promote lithium ion transmission and enable uniform lithium ion flow and thereby better induce uniform lithium deposition, slow down or even inhibit the growth of lithium dendrites, and effectively reduce the local generation of sharp lithium dendrites, thereby reducing or even avoiding the problem of internal short circuits in the battery due to lithium dendrites puncturing the separator. In addition, when the thickness of the first coating is within the above range, the separator can have low internal resistance, short lithium ion transmission path and high lithium ion transmission rate, thereby enabling the battery to have both good cycle performance and good dynamics performance.

In some embodiments, the surface density of the first coating may be 9-12 g/m², optionally 10-11.5 g/m². When the surface density of the first coating is within the above range, a dense and uniform intermediate layer can be formed on the surface of the separator, which can better promote lithium ion transmission and enable uniform lithium ion flow and thereby better induce uniform lithium deposition, slow down or even inhibit the growth of lithium dendrites, and effectively reduce the local generation of sharp lithium dendrites, thereby reducing or even avoiding the problem of internal short circuits in the battery due to lithium dendrites puncturing the separator. In addition, when the surface density of the first coating is within the above range, the separator can have low internal resistance, short lithium ion transmission path and high lithium ion transmission rate, thereby enabling the battery to have both good cycle performance and good dynamics performance.

In some embodiments, the second coating may further include a second binder. The present application does not particularly limit the type of the second binder. As an example, the second binder may include, but is not limited to, one or more of a vinylidene fluoride homopolymer and/or copolymer, sodium carboxymethylcellulose, and styrene-butadiene rubber.

In some embodiments, the mass ratio of the second particle to the second binder may be 100:(1-25), optionally 100:(8-22). An appropriate amount of second binder can improve the heat resistance and uniformity of the second coating and can effectively avoid problems such as powder drop, and also can enable the separator to have good ion conductivity.

In some embodiments, the second coating may further include a second dispersant. The present application does not particularly limit the type of the second dispersant. As an example, the second dispersant may include, but is not limited to, one or more of hydrolyzed polymaleic anhydride, polyacrylic acid, an acrylic block copolymer, a polyester block copolymer, a polyethylene glycol polyol, polyethyleneimine, and respective derivatives thereof. Derivatives usually refer to products derived from the replacement of hydrogen atoms or atomic groups in a polymer by other atoms or atomic groups.

In some embodiments, the mass ratio of the second particle to the second dispersant may be 100:(0.5-4.0), optionally 100:(1.0-2.0). An appropriate amount of second dispersant can make the slurry dispersed uniformly, which is beneficial for coating and also helps to improve the film quality of the second coating.

In some embodiments, the second coating may further include a second thickener. The present application does not particularly limit the type of the second thickener. As an example, the second thickener may include, but is not limited to, one or more of sodium hydroxymethylcellulose, methyl cellulose, hydroxyethyl cellulose, hydroxypropyl methyl cellulose, polyacrylate, polyurethane, and polyether.

In some embodiments, the mass ratio of the second particle to the second thickener may be 100:(5-30), optionally 100:(10-25). An appropriate amount of second thickener can improve the stability of the slurry, which is beneficial for coating and also helps to improve the film quality of the second coating.

In some embodiments, the thickness of the second coating may be 1-7 µm, optionally 1.5-6 µm. When the thickness of the second coating is within the above range, the second coating can better react with lithium dendrites, consume lithium dendrites in time, and prevent the further growth of lithium dendrites, thereby effectively reducing or even avoiding the problem of internal short circuits in the battery resulting from the contact of lithium dendrites with the positive electrode. In addition, when the thickness of the second coating is within the above range, the separator can have low internal resistance, short lithium ion transmission path and high lithium ion transmission rate, thereby enabling the battery to have both good cycle performance and good dynamics performance.

In some embodiments, the surface density of the second coating may be 4-14 g/m², optionally 8-12 g/m². When the surface density of the second coating is within the above range, the second coating can better react with lithium dendrites, consume lithium dendrites in time, and prevent the further growth of lithium dendrites, thereby effectively reducing or even avoiding the problem of internal short circuits in the battery resulting from the contact of lithium dendrites with the positive electrode. In addition, when the surface density of the second coating is within the above range, the separator can have low internal resistance, short lithium ion transmission path and high lithium ion transmission rate, thereby enabling the battery to have both good cycle performance and good dynamics performance.

In some embodiments, the thickness of the porous substrate may be 4-15 µm, optionally 5-10 µm.

In some embodiments, the porous substrate may include, but is not limited to, one or more of polyolefin (e.g., polyethylene or polypropylene), halogenated polyolefin (e.g., polytetrafluoroethylene, polyvinylidene fluoride, or polyvinyl chloride), polyamide, polyester (e.g., polyethylene terephthalate), and respective derivatives thereof.

Derivatives usually refer to products derived from the replacement of hydrogen atoms or atomic groups in a polymer by other atoms or atomic groups.

In some embodiments, the weight-average molecular weight of the porous substrate may be 100,000-1,000,000.

The weight-average molecular weight of the porous substrate has the meaning well-known in the art and can be measured by a method known in the art. For example, the test may be performed using gel permeation chromatography (GPC).

In some embodiments, the total thickness of the separator may be 8-25 µm, optionally 8-18 µm. As such, the separator can have low internal resistance, short lithium ion transmission path and high lithium ion transmission rate, thus enabling the battery to have both good cycle performance and good dynamics performance.

In some embodiments, the porosity of the separator may be 40%-80%, optionally 45%-70%. This helps the separator to have good air permeability and high ion transmission capacity.

The porosity of the separator has the meaning well-known in the art and can be measured by a method known in the art. For example, the test may be performed with reference to standard GB/T 36363-2018.

In some embodiments, the transverse (TD) tensile strength of the separator may be 1000-1500 kgf/cm², optionally 1100-1300 kgf/cm². This can improve the reliability of the battery.

The transverse tensile strength of the separator has the meaning well-known in the art and can be measured by a method known in the art. For example, the test may be performed with reference to standard GB/T 36363-2018. During the test, the stretching rate may be 50 mm/min.

In some embodiments, the peel strength between the first coating and the porous substrate of the separator may be 8.9-13.2 N/m, optionally 9.1-11.8 N/m.

In some embodiments, the peel strength between the second coating and the porous substrate of the separator may be 12.9-20.6 N/m, optionally 13.5-17.8 N/m.

The separator has high peel strength, such that the reliability of the battery can be improved.

The peel strength of the separator has the meaning well-known in the art and can be measured by a method known in the art. For example, the test may be performed with reference to standard GB/T 36363-2018.

In some embodiments, the puncture strength of the separator may be 9.60-11.50 N•µm⁻¹, optionally 9.80-10.90 N•µm⁻¹. This can improve the reliability of the battery.

The puncture strength of the separator has the meaning well-known in the art and can be measured by a method known in the art. For example, the test may be performed with reference to standard GB/T 36363-2018.

In some embodiments, the ionic conductivity of the separator at 25 °C may be 1.40-2.50 mS•cm⁻¹, optionally 1.60-2.15 mS•cm⁻¹. This can improve the cycle performance and dynamics performance of the battery.

The ionic conductivity of the separator can be obtained through the electrochemical impedance spectroscopy experiment. For example, the separator can be cut into discs of a certain area, dried, and placed between two stainless steel electrodes. After absorption of a sufficient amount of electrolytic solution, sealing is performed to form a button battery, and then the electrochemical impedance spectroscopy experiment is performed. The resistance Rs of different separator layers n measured using the confined symmetric battery electrochemical impedance spectroscopy method is used as the separator resistance, and the slope k (corresponding to the resistance of a single-layer separator) was obtained by plotting with Rs and n. The ionic conductivity of the separator was calculated based on the resistance of the single-layer separator, the area of the separator, and the thickness of the separator (single-layer thickness).

The volume distribution particle size Dv50 of a particle has the meaning well-known in the art and can be measured using instruments and methods known in the art. For example, the test may be performed with reference to GB/T 19077-2016 and using a laser particle size analyzer (such as Master Size 3000).

### [Method for Preparing Separator]

Embodiments of the present application also provide a method for preparing a separator.

The preparation method includes the following steps: providing a porous substrate; providing a first coating slurry and a second coating slurry, where the first coating slurry includes a first particle, the first particle includes a solid-state electrolyte, and the content of the first particle in the first coating after drying is greater than 50 wt%, the second coating slurry includes a second particle, the second particle includes an inorganic particle capable of reacting with lithium dendrites, and the content of the second particle in the second coating after drying is greater than 50 wt%; applying the first coating slurry and the second coating slurry on two surfaces of the porous substrate, respectively, and drying to obtain a separator.

In some embodiments, the first coating slurry may further include a third particle.

In some embodiments, the first coating slurry may further include one or more of a first binder, a first dispersant, and a first thickener.

In some embodiments, the step of providing a first coating slurry may include the following steps: adding a first particle, a first dispersant, and an optional third particle to a first solvent for primary dispersion to obtain a primary dispersion solution; adding a first thickener to the primary dispersion solution for secondary dispersion to obtain a secondary dispersion solution; and adding a first binder to the secondary dispersion solution and stirring uniformly to obtain a first coating slurry.

Optionally, in the step of providing the first coating slurry, the first solvent may include one or more of deionized water, N,N-dimethylformamide (DMF), N-methylpyrrolidone (NMP), N,N-dimethylacetamide (DMAC), and tetrahydrofuran (THF).

Optionally, in the step of providing the first coating slurry, the primary dispersion process may be ultrasonic dispersion. Optionally, the ultrasonic dispersion may be performed for no less than 2 h.

Optionally, in the step of providing the first coating slurry, stirring is required during the secondary dispersion. For example, the stirring speed may be 500-1200 rpm, and the stirring time may be 0.5-1.5 h.

Optionally, in the step of providing the first coating slurry, after addition of the first binder to the resulting secondary dispersion solution, the mixture may be stirred at a rotation speed of 500-1200 rpm for 0.5-1.5 h.

In some embodiments, the solid content of the first coating slurry may be 30%-50%, optionally 34%-45%. As such, the coating is facilitated.

In some embodiments, the second coating slurry may further include one or more of a second binder, a second dispersant, and a second thickener.

In some embodiments, the step of providing a second coating slurry may include the following steps: adding a second particle and a second dispersant to a second solvent for primary dispersion to obtain a primary dispersion solution; adding a second thickener to the primary dispersion solution for secondary dispersion to obtain a secondary dispersion solution; and adding a second binder to the secondary dispersion solution and stirring uniformly to obtain a second coating slurry.

Optionally, in the step of providing the second coating slurry, the second solvent may include one or more of deionized water, N,N-dimethylformamide (DMF), N-methylpyrrolidone (NMP), N,N-dimethylacetamide (DMAC), and tetrahydrofuran (THF).

Optionally, in the step of providing the second coating slurry, the primary dispersion process may be ultrasonic dispersion. Optionally, the ultrasonic dispersion may be performed for no less than 2 h.

Optionally, in the step of providing the second coating slurry, stirring is required during the secondary dispersion. For example, the stirring speed may be 500-1200 rpm, and the stirring time may be 0.5-1.5 h.

Optionally, in the step of providing the second coating slurry, after addition of the second binder to the resulting secondary dispersion solution, the mixture may be stirred at a rotation speed of 500-1200 rpm for 0.5-1.5 h.

In some embodiments, the solid content of the second coating slurry may be 30%-50%, optionally 34%-45%. As such, the coating is facilitated.

In some embodiments, when the first coating slurry and the second coating slurry are applied on the two surfaces of the porous substrate, respectively, for drying, the drying temperature may be 60-120 °C.

In some embodiments, the coating method of the first coating slurry and the second coating slurry may be transfer coating, rotary spray coating, dip coating, wire bar coating, etc., which is not limited in the embodiments of the present application.

For some raw materials used in the method for preparing a separator provided in the embodiments of the present application and their content and other parameters, reference can be made to the separator of the first aspect of the embodiments of the present application, and the details will not be repeated here.

Unless otherwise specified, all raw materials used in the method for preparing a separator provided in the embodiments of the present application are commercially available.

### [Positive Electrode Plate]

The structure and composition of the positive electrode plate may be selected according to the type of battery cell, which is not limited in the embodiments of the present application.

In some embodiments, the positive electrode plate includes a positive electrode current collector and a positive electrode film layer disposed on at least one surface of the positive electrode current collector and including a positive electrode active material. For example, the positive electrode current collector has two surfaces opposite to each other in its own thickness direction, and the positive electrode film layer is disposed on any one or both of the two opposite surfaces of the positive electrode current collector.

The positive electrode active material includes a material that enables deintercalation and intercalation of lithium ions. For example, the positive electrode active material may include, but is not limited to, one or more of a lithium transition metal oxide, a lithium-containing phosphate, a layered metal chalcogenide, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium titanium oxide, and respective modified compounds thereof. Examples of the lithium-containing phosphate may include, but are not limited to, one or more of lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and respective modified compounds thereof.

In some embodiments, in order to further improve the energy density of the battery, the positive electrode active material may include one or more of lithium transition metal oxides with the general formula LiₐNi_{b}Co_{c}M_{d}OₑDf and modified compounds thereof, where 0.8 ≤ a ≤ 1.2, 0.5 ≤ b < 1, 0 < c < 1, 0 < d < 1, 1 ≤ e ≤2, 0 ≤ f ≤ 1, M includes one or more of Ge, Mo, Sn, Mn, Al, Zr, Zn, Cu, Cr, Mg, Fe, V, Ti, and B, and D includes one or more of N, F, S, and Cl.

As an example, the positive electrode active material may include one or more of LiCoO₂, LiNiO₂, LiMnO₂, LiMn₂O₄, LiNi_{1/2}Mn_{1/2}O₂, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, LiMnPO₄, and Li_{1.13}Ti_{0.57}Fe_{0.3}S₂.

The modified compounds of the above positive electrode active materials may be obtained by doping modification and/or surface-coating modification of the positive electrode active materials.

In some embodiments, the positive electrode film layer further optionally includes a positive electrode conductive agent. The present application does not particularly limit the type of the positive electrode conductive agent. As an example, the positive electrode conductive agent includes one or more of superconducting carbon, conductive graphite, acetylene black, carbon black, Ketjen black, a carbon dot, a carbon nanotube, graphene, and a carbon nanofiber.

In some embodiments, the positive electrode film layer further optionally includes a positive electrode binder. The present application does not particularly limit the type of the positive electrode binder. As an example, the positive electrode binder may include one or more of polyvinylidene fluoride (PVDF), polytetrafluoroethylene (PTFE), vinylidene fluoridetetrafluoroethylene-propylene terpolymer, vinylidene fluoride-hexafluoropropylene-tetrafluoroethylene terpolymer, tetrafluoroethylene-hexafluoropropylene copolymer, fluorinated acrylic resin, and polyethylene oxide.

In some embodiments, a metal foil or a composite current collector may be used as the positive electrode current collector. As an example of the metal foil, an aluminum foil may be used. The composite current collector may include a polymer material substrate and a metal material layer formed on at least one surface of the polymer material substrate. As an example, the metal material may include one or more of aluminum, an aluminum alloy, nickel, a nickel alloy, titanium, a titanium alloy, silver, and a silver alloy. As an example, the polymer material substrate may include one or more of polypropylene (PP), polyethylene terephthalate (PET), polybutylene terephthalate (PBT), polystyrene (PS), and polyethylene (PE).

The positive electrode film layer is generally formed by coating a positive electrode current collector with a positive electrode slurry, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

### [Negative Electrode Plate]

The structure and composition of the negative electrode plate may be selected according to the type of battery cell, which is not limited in the embodiments of the present application.

In some embodiments, the negative electrode plate may include a negative electrode current collector and a negative electrode film layer disposed on at least one surface of the negative electrode current collector, the negative electrode film layer includes a negative electrode active material, and the negative electrode active material includes a material that enables deintercalation and intercalation of active ions. For example, the negative electrode current collector has two surfaces opposite to each other in its own thickness direction, and the negative electrode film layer is disposed on any one or both of the two opposite surfaces of the negative electrode current collector.

The negative electrode active material may be any negative electrode active material known in the art. As an example, the negative electrode active material may include, but is not limited to, one or more of a carbon-based material, a silicon-based material, a tin-based material, and lithium titanate. The carbon-based material may include one or more of natural graphite, artificial graphite, soft carbon, hard carbon, pyrolytic carbon, coke, glassy carbon, a sintered body of an organic polymer compound, and a mesocarbon microbead. The silicon-based material may include one or more of elemental silicon, an oxide of silicon, a siliconcarbon composite, a silicon-nitrogen composite, and a silicon alloy material. The tin-based material may include one or more of elemental tin, an oxide of tin, and a tin alloy material.

In some embodiments, the negative electrode film layer further optionally includes a negative electrode conductive agent. The present application does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

In some embodiments, the negative electrode film layer further optionally includes a negative electrode binder. The present application does not particularly limit the type of the negative electrode binder. As an example, the negative electrode binder may include one or more of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the negative electrode film layer further optionally includes other auxiliary agents. As an example, other auxiliary agents may include thickeners, such as sodium carboxymethylcellulose (CMC) or PTC thermistor materials.

In some embodiments, a metal foil or a composite current collector may be used as the negative electrode current collector. As an example of the metal foil, a copper foil may be used. The composite current collector may include a polymer material substrate and a metal material layer formed on at least one surface of the polymer material substrate. As an example, the metal material may include one or more of copper, a copper alloy, nickel, a nickel alloy, titanium, a titanium alloy, silver, and a silver alloy. As an example, the polymer material substrate may include one or more of polypropylene (PP), polyethylene terephthalate (PET), polybutylene terephthalate (PBT), polystyrene (PS), and polyethylene (PE).

The negative electrode film layer is generally formed by coating a negative electrode current collector with a negative electrode slurry, drying, and cold pressing. The negative electrode slurry is generally formed by dispersing a negative electrode active material, an optional conductive agent, an optional binder, and other optional auxiliary agents in a solvent and uniformly stirring. The solvent may be N-methylpyrrolidone (NMP) or deionized water, but is not limited thereto.

The negative electrode plate does not exclude additional functional layers other than the negative electrode film layer. For example, in some embodiments, the negative electrode plate further includes a conductive bottom coating (e.g., composed of a conductive agent and a binder) sandwiched between the negative electrode current collector and the negative electrode film layer and arranged on the surface of the negative electrode current collector. In some embodiments, the negative electrode plate further includes a protective layer covering the surface of the negative electrode film layer.

In some embodiments, the negative electrode plate may not include materials that enable deintercalation and intercalation of active ions, such as graphite. For example, in some embodiments, the negative electrode plate may include a lithium foil or a lithium alloy foil; in some other embodiments, the negative electrode plate includes a mesh-like or foam-like three-dimensional skeleton layer, such as foam copper (or copper alloy), foam nickel (or nickel alloy), a copper (or copper alloy) mesh, or a nickel (or nickel alloy) mesh.

### [Electrolytic Solution]

The electrolytic solution includes an electrolyte salt and a solvent. The types of the electrolyte salt and the solvent are not particularly limited, and a choice can be made as needed in practice.

As an example, the electrolyte salt may include, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

In some embodiments, the concentration of the electrolyte salt may be no less than 0.3 mol/L, optionally greater than 0.7 mol/L. The concentration of the electrolyte salt may further be no more than 4 mol/L, optionally no more than 2.5 mol/L or 1.7 mol/L.

The solvent may include one or more of esters (e.g., carbonate, phosphate, carboxylate, sulfate, or sulfonate), ethers, sulfones, nitriles, and the like.

For example, when the battery cell is a lithium-ion battery cell, as an example, the solvent may include, but is not limited to, one or more of ethylene carbonate (EC), propylene carbonate (PC), butene carbonate, ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), tetraethylene glycol dimethyl ether (TEGDME), dimethoxyethane (DME), 1,3-dioxolane (DOL), trimethyl phosphate, and 3-methoxypropionitrile.

For example, when the battery cell is a lithium metal battery cell or an anode-free lithium metal battery cell, the solvent may include an ether solvent and/or a fluoroether solvent. For example, the solvent may include one or more of tetraethylene glycol dimethyl ether (TEGDME), dimethoxyethane (DME), 1,3-dioxolane (DOL), H(CF₂)₂OCH₃, C₄F₉OCH₃, H(CF₂)₂OCH₂CH₃, H(CF₂)₂OCH₂CF₃, H(CF₂)₂CH₂O(CF₂)₂H, CF₃CHFCF₂OCH₃, CF₃CHFCF₂OCH₂CH₃, 2-trifluoromethylhexafluoropropyl methyl ether, 2-trifluoromethylhexafluoropropyl ethyl ether, 2-trifluoromethylhexafluoropropyl propyl ether, 3-trifluoromethyloctafluorobutyl methyl ether, 3-trifluoromethyloctafluorobutyl ethyl ether, 3-trifluoromethyloctafluorobutyl propyl ether, 4-trifluoromethyldecafluoropentyl methyl ether, 4-trifluoromethyldecafluoropentyl ethyl ether, 4-trifluoromethyldecafluoropentyl propyl ether, 5-trifluoromethyldodecafluorohexyl methyl ether, 5-trifluoromethyldodecafluorohexyl ethyl ether, 5-trifluoromethyldodecafluorohexyl propyl ether, 6-trifluoromethyltetradecafluoroheptyl methyl ether, 6-trifluoromethyltetradecafluoroheptyl ethyl ether, 6-trifluoromethyltetradecafluoroheptyl propyl ether, 7-trifluoromethylhexadecafluorooctyl methyl ether, 7-trifluoromethylhexadecafluorooctyl ethyl ether, and 7-trifluoromethylhexadecafluorooctyl propyl ether.

In some embodiments, the electrolytic solution further optionally includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, or an additive for improving the lowtemperature power performance of the battery.

Embodiments of the present application further provide an electric device, which includes the battery of the present application. The battery may be used as a power source for the electric device, or as an energy storage unit for the electric device. The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

The electric device can select a specific type of battery according to its use requirements, such as a battery cell, a battery module, or a battery pack.

FIG. 7 is a schematic diagram of an electric device as one example. The electric device is a pure electric vehicle, a hybrid electric vehicle, a plug-in hybrid electric vehicle, or the like. To meet the requirements of the electric device for high power and high energy density, a battery pack or a battery module may be used as the power source.

As another example, the electric device may be a mobile phone, a tablet computer, a notebook computer, or the like. The electric device is generally required to be light and thin, and a battery cell can thus be used as the power source.

### Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

**The separators of Examples 1-27 were all prepared according to the following method.**

### Preparation of porous substrate

A 7 µm thick polyethylene porous film was washed with ethanol or acetone, dried and flattened at 60 °C, and then subjected to plasma treatment for 4 min to obtain a porous substrate for later use.

### Preparation of first coating slurry

The first particle, the third particle, the first dispersant, acrylic block copolymer, and the first solvent, NMP, shown in Table 1 were mixed, and the mixture was ultrasonically dispersed in an ultrasonic cleaning machine for 2 h to obtain a primary dispersion solution. The first thickener, sodium hydroxymethylcellulose, was added to the resulting primary dispersion solution for secondary dispersion to obtain a secondary dispersion solution. The stirring speed was 1100 rpm and the stirring time was 1 h. The first binder, PVDF, was added to the resulting secondary dispersion solution, and the mixture was stirred at 900 rpm for 60 min to obtain the first coating slurry. In Examples 1-27, the mass ratios of the first particle, the third particle, the first binder, the first thickener, and the first dispersant are shown in Table 1. In Table 1, Li_{1.3}Al_{0.3}Ti_{1.7}(PO₄)₃ is abbreviated as LATP, LiTi₂(PO₄)₃ is abbreviated as LTP, and Li₇La₃Zr₂O₁₂ is abbreviated as LLZO.

### Preparation of second coating slurry

The second particle, the second dispersant, acrylic block copolymer, and the second solvent, NMP, shown in Table 1 were mixed, and the mixture was ultrasonically dispersed in an ultrasonic cleaning machine for 2 h to obtain a primary dispersion solution. The second thickener, sodium hydroxymethylcellulose, was added to the resulting primary dispersion solution for secondary dispersion to obtain a secondary dispersion solution. The stirring speed was 1100 rpm and the stirring time was 1 h. The second binder, PVDF, was added to the resulting secondary dispersion solution, and the mixture was stirred at 900 rpm for 60 min to obtain the second coating slurry. In Examples 1-27, the mass ratios of the second particle, the second binder, the second thickener, and the second dispersant are shown in Table 1.

### Preparation of separator

The first coating slurry and the second coating slurry were applied on two sides of the porous substrate, respectively, by wire bar coating, and then the porous substrate was dried in vacuum at 60 °C for 30 min to obtain the separator. In Examples 1-27, the thicknesses of the first coating and the second coating are shown in Table 1.

### Comparative Example 1

### Preparation of porous substrate

A 7 µm thick polyethylene porous film was washed with ethanol or acetone, dried and flattened at 60 °C, and then subjected to plasma treatment for 4 min to obtain a porous substrate for later use.

### Preparation of coating slurry

Li_{1.3}Al_{0.3}Ti_{1.7}(PO₄)₃, the dispersant, acrylic block copolymer, and the solvent, NMP, were mixed, and the mixture was ultrasonically dispersed in an ultrasonic cleaning machine for 2 h to obtain a primary dispersion solution. The thickener, sodium hydroxymethylcellulose, was added to the resulting primary dispersion solution for secondary dispersion to obtain a secondary dispersion solution. The stirring speed was 1100 rpm and the stirring time was 1 h. The binder, PVDF, was added to the resulting secondary dispersion solution, and the mixture was stirred at 900 rpm for 60 min to obtain the coating slurry. The mass ratio of Li_{1.3}Al_{0.3}Ti_{1.7}(PO₄)₃, the binder, the thickener, and the dispersant was 100:25.0:2.5:30.0.

### Preparation of separator

The coating slurry was applied on two sides of the porous substrate by wire bar coating, and then the porous substrate was dried in vacuum at 60 °C for 30 min to obtain the separator. The thickness of the coating on both sides of the porous substrate was 4 µm.

### Comparative Example 2

### Preparation of porous substrate

A 7 µm thick polyethylene porous film was washed with ethanol or acetone, dried and flattened at 60 °C, and then subjected to plasma treatment for 4 min to obtain a porous substrate for later use.

### Preparation of coating slurry

The SiO particle, the dispersant, acrylic block copolymer, and the solvent, NMP, were mixed, and the mixture was ultrasonically dispersed in an ultrasonic cleaning machine for 2 h to obtain a primary dispersion solution. The thickener, sodium hydroxymethylcellulose, was added to the resulting primary dispersion solution for secondary dispersion to obtain a secondary dispersion solution. The stirring speed was 1100 rpm and the stirring time was 1 h. The binder, PVDF, was added to the resulting secondary dispersion solution, and the mixture was stirred at 900 rpm for 60 min to obtain the coating slurry. The mass ratio of the SiO particle, the binder, the thickener, and the dispersant was 100:25.0:2.5:30.0.

### Preparation of separator

The coating slurry was applied on two sides of the porous substrate by wire bar coating, and then the porous substrate was dried in vacuum at 60 °C for 30 min to obtain the separator. The thickness of the coating on both sides of the porous substrate was 4 µm.

### Comparative Example 3

### Preparation of porous substrate

A 7 µm thick polyethylene porous film was washed with ethanol or acetone, dried and flattened at 60 °C, and then subjected to plasma treatment for 4 min to obtain a porous substrate for later use.

### Preparation of first coating slurry

The first particle, Li_{1.3}Al_{0.3}Ti_{1.7}(PO₄)₃ (the volume distribution particle size Dv50 being 0.5 µm), the first dispersant, acrylic block copolymer, and the first solvent, NMP, were mixed, and the mixture was ultrasonically dispersed in an ultrasonic cleaning machine for 2 h to obtain a primary dispersion solution. The first thickener, sodium hydroxymethylcellulose, was added to the resulting primary dispersion solution for secondary dispersion to obtain a secondary dispersion solution. The stirring speed was 1100 rpm and the stirring time was 1 h. The first binder, PVDF, was added to the resulting secondary dispersion solution, and the mixture was stirred at 900 rpm for 60 min to obtain the first coating slurry. The mass ratio of the first particle, the first binder, the first thickener, and the first dispersant was 100:65:5:75.

### Preparation of second coating slurry

The second particle, SiO (the volume distribution particle size Dv50 being 1 µm), the second dispersant, acrylic block copolymer, and the second solvent, NMP, were mixed, and the mixture was ultrasonically dispersed in an ultrasonic cleaning machine for 2 h to obtain a primary dispersion solution. The second thickener, sodium hydroxymethylcellulose, was added to the resulting primary dispersion solution for secondary dispersion to obtain a secondary dispersion solution. The stirring speed was 1100 rpm and the stirring time was 1 h. The second binder, PVDF, was added to the resulting secondary dispersion solution, and the mixture was stirred at 900 rpm for 60 min to obtain the second coating slurry. The mass ratio of the second particle, the second binder, the second thickener, and the second dispersant was 100:65:5:75.

The first coating slurry and the second coating slurry were applied on two sides of the porous substrate, respectively, by wire bar coating, and then the porous substrate was dried in vacuum at 60 °C for 30 min to obtain the separator. The thicknesses of the first coating and the second coating were both 4 µm.

In the above Examples 1-27 and Comparative Examples 1-3, when the separators are used in a battery, the first coatings all face the negative electrode and the second coatings all face the positive electrode.

### Comparative Example 4

The method for preparing the separator was the same as that of Example 1, except that when the separator was used in a battery, the first coating of the separator prepared in Example 1 was arranged to face the positive electrode, and its second coating was arranged to face the negative electrode.

### Performance Testing

### (1) Transverse tensile strength test of separator

The tensile strength of the separator in the transverse direction was tested according to GB/T 36363-2018. The separator was cut into samples with a width of 10 mm and a length of 150 mm (the length direction was parallel to the transverse direction of the separator) for testing. The testing instrument might be a universal testing machine, and the stretching rate might be 50 mm/min. During the test, the number of separator samples might be no less than 6, and the test results were averaged.

### (2) Puncture strength test of separator

The puncture strength of the separator was tested according to GB/T 36363-2018. The separator was cut into samples with a width of 10 mm and a length of 150 mm. A steel needle was used to stab the samples at a rate of 50 mm/min, and the maximum load when the steel needle punctured the separator was read. During the test, the number of separator samples might be no less than 6, 3 points were selected on each separator sample, and the test results were averaged. The diameter of the steel needle might be 1 mm, the radius of the spherical top might be 0.5 mm, and the surface of the steel needle was smooth and free of rust, oxide layer, and oil stain.

### (3) Ionic conductivity test of separator

The ionic conductivity of the separator was obtained through the electrochemical impedance spectroscopy experiment. Specifically, the separator was cut into discs with a diameter of 22 mm, dried, and placed between two stainless steel electrodes. After absorption of a sufficient amount of electrolytic solution, sealing was performed to form a button battery, and then the electrochemical impedance spectroscopy experiment was performed using an electrochemical workstation. The electrolyte salt of the electrolytic solution was LiDFOB with a concentration of 1.2 mol/L; the solvent of the electrolytic solution was a mixture of ethylene carbonate (EC) and ethyl methyl carbonate (EMC) with a mass ratio of 30:70. The resistance Rs of different separator layers n measured using the confined symmetric battery electrochemical impedance spectroscopy method is used as the separator resistance, and the slope k (corresponding to the resistance of a single-layer separator) was obtained by plotting with Rs and n. The ionic conductivity of the separator was calculated based on the resistance of the single-layer separator, the area of the separator, and the thickness of the separator (single-layer thickness).

The electrochemical workstation might be the Shanghai Chenhua CHI 660C electrochemical workstation, with an AC signal frequency range of 0.01 Hz to 1 MHz and a sine wave potential amplitude of 5 mV. For the sake of accuracy, the average value of 6 parallel samples was taken as the test result.

The test results are shown in Table 2.

**Table 1**

| Serial number | First coating | | | | | Second coating | | | |
|---|---|---|---|---|---|---|---|---|---|
| | First particle | Third particle | Dv50 of first particle and third particle (µm) | First particle:third particle:first binder:first dispersant: first thickener | Thickness (µm) | Second particle | Dv50 of second particle (µm) | Second particle:second binder:second dispersant: second thickener | Thickness (µm) |
| Example 1 | LATP | / | 0.5 | 100:0:13.5:1.5:23.6 | 4 | SiO | 1 | 100:13.5:1.5:23.6 | 4 |
| Example 2 | LATP | / | 0.5 | 100:0:20.6:1.6:20.6 | 4 | SiO | 1 | 100:20.6:1.6:20.6 | 4 |
| Example 3 | LATP | / | 0.5 | 100:0:21.3:1.8:25.0 | 4 | SiO | 1 | 100:21.3:1.8:25.0 | 4 |
| Example 4 | LATP | / | 0.5 | 100:0:20.0:1.7:23.9 | 4 | SiO | 1 | 100:20.0:1.7:23.9 | 4 |
| Example 5 | LATP | / | 0.5 | 100:0:25.0:2.5:30.0 | 4 | SiO | 1 | 100:25.0:2.5:30.0 | 4 |
| Example 6 | LATP | / | 0.5 | 100:0:8.5:1.5:12.0 | 4 | SiO | 1 | 100:8.5:1.5:12.0 | 4 |
| Example 7 | LLZO | / | 0.5 | 100:0:13.5:1.5:23.6 | 4 | SiO | 1 | 100:13.5:1.5:23.6 | 4 |
| Example 8 | LTP | / | 0.5 | 100:0:13.5:1.5:23.6 | 4 | SiO | 1 | 100:13.5:1.5:23.6 | 4 |
| Example 9 | LATP | / | 0.5 | 100:0:13.5:1.5:23.6 | 4 | SiO₂ | 1 | 100:13.5:1.5:23.6 | 4 |
| Example 10 | LATP | / | 0.5 | 100:0:13.5:1.5:23.6 | 4 | Al₂O₃ | 1 | 100:13.5:1.5:23.6 | 4 |
| Example 11 | LATP | / | 0.5 | 100:0:13.5:1.5:23.6 | 4 | Fe₂O₃ | 1 | 100:13.5:1.5:23.6 | 4 |
| Example 12 | LATP | / | 0.1 | 100:0:13.5:1.5:23.6 | 4 | SiO | 1 | 100:13.5:1.5:23.6 | 4 |
| Example 13 | LATP | / | 1 | 100:0:13.5:1.5:23.6 | 4 | SiO | 1 | 100:13.5:1.5:23.6 | 4 |
| Example 14 | LATP | / | 3 | 100:0:13.5:1.5:23.6 | 4 | SiO | 1 | 100:13.5:1.5:23.6 | 4 |
| Example 15 | LATP | / | 0.5 | 100:0:13.5:1.5:23.6 | 4 | SiO | 0.5 | 100:13.5:1.5:23.6 | 4 |
| Example 16 | LATP | / | 0.5 | 100:0:13.5:1.5:23.6 | 4 | SiO | 2 | 100:13.5:1.5:23.6 | 4 |
| Example 17 | LATP | / | 0.5 | 100:0:13.5:1.5:23.6 | 4 | SiO | 3 | 100:13.5:1.5:23.6 | 4 |
| Example 18 | LATP | / | 0.5 | 100:0:13.5:1.5:23.6 | 4 | SiO | 5 | 100:13.5:1.5:23.6 | 4 |
| Example 19 | LATP | / | 0.5 | 100:0:13.5:1.5:23.6 | 1 | SiO | 1 | 100:13.5:1.5:23.6 | 7 |
| Example 20 | LATP | / | 0.5 | 100:0:13.5:1.5:23.6 | 1.5 | SiO | 1 | 100:13.5:1.5:23.6 | 6.5 |
| Example 21 | LATP | / | 0.5 | 100:0:13.5:1.5:23.6 | 2 | SiO | 1 | 100:13.5:1.5:23.6 | 6 |
| Example 22 | LATP | / | 0.5 | 100:0:13.5:1.5:23.6 | 3 | SiO | 1 | 100:13.5:1.5:23.6 | 5 |
| Example 23 | LATP | / | 0.5 | 100:0:13.5:1.5:23.6 | 5 | SiO | 1 | 100:13.5:1.5:23.6 | 3 |
| Example 24 | LATP | / | 0.5 | 100:0:13.5:1.5:23.6 | 6 | SiO | 1 | 100:13.5:1.5:23.6 | 2 |
| Example 25 | LATP | / | 0.5 | 100:0:13.5:1.5:23.6 | 7 | SiO | 1 | 100:13.5:1.5:23.6 | 1 |
| Example 26 | LATP | SiO | 0.5 | 95:5:13.5:1.5:23.6 | 4 | SiO | 1 | 100:13.5:1.5:23.6 | 4 |
| Example 27 | LATP | SiO | 0.5 | 84:16:13.5:1.5:23.6 | 4 | SiO | 1 | 100:13.5:1.5:23.6 | 4 |

Next, the above separators were each assembled into a button battery and then the electrochemical performance was tested.

The button battery can be prepared as follows.

Lithium iron phosphate, the conductive agent, carbon black (Super P), and the binder, polyvinylidene fluoride (PVDF), were well mixed in a proper amount of the solvent, N-methylpyrrolidone (NMP), at a mass ratio of 8:1:1 to obtain a positive electrode slurry; the positive electrode slurry was applied on a positive electrode current collector aluminum foil, and after drying, a positive electrode plate was obtained. In a glove box under argon atmosphere, the positive electrode plate, the separator, and the lithium foil were assembled into a CR2430 button battery. The electrolyte salt of the electrolytic solution was LiDFOB with a concentration of 1.2 mol/L; the solvent of the electrolytic solution was a mixture of ethylene carbonate (EC) and ethyl methyl carbonate (EMC) with a mass ratio of 30:70.

The first coatings of the separators of Examples 1-27 and Comparative Examples 1-3 all face the lithium foil, and the second coatings all face the positive electrode plate. In Comparative Example 4, the same separator as that of Example 1 was used, except that the first coating of the separator prepared in Example 1 was arranged to face the positive electrode plate, and its second coating was arranged to face the lithium foil.

At 25 °C, the button battery was charged at a constant current of 0.1 C to 3.65 V and then charged at a constant voltage of 3.65 V to 0.02 C; after being left to stand for 10 min, the button battery was discharged at a constant current of 0.1 C to 2.5 V. After the button battery was subjected to two cycles according to the above method, the following cycle performance test was performed.

First, the button battery was charged at a constant current of 0.33 C to 3.65 V and then charged at a constant voltage of 3.65 V to 0.02 C, such that the button battery was fully charged; then, the button battery was left to stand for 10 min and then discharged at a constant current of 0.33 C to 2.5 V. This is one charge and discharge cycle. The discharge capacity at this time was recorded, and this is the discharge capacity of the first cycle.

The button battery was subjected to 100 cycles according to the above method. The average value of the coulombic efficiency of the button battery from the 21st cycle to the 100th cycle was calculated, and this value was used as the average coulombic efficiency of the button battery. Coulombic efficiency = discharge capacity/charge capacity. Capacity retention rate of button battery after 100 cycles = discharge capacity of the 100th cycle/discharge capacity of the 20th cycle.

The button battery was subjected to a cyclic charge and discharge test according to the above method, and the discharge capacity after each cycle was recorded until the discharge capacity of the button battery decreased to 70% of the discharge capacity of the first cycle. The number of cycles at this time was used to characterize the cycle performance of the battery.

The test results are shown in Table 2.

**Table 2**

| Serial number | Performance of separator | | | | | Performance of battery | | |
|---|---|---|---|---|---|---|---|---|
| | Content of first particle in first coating | Content of second particle in second coating | Transverse tensile strength kgf/cm² | Puncture strength N·µm⁻¹ | Ionic conductivity mS·cm⁻¹ | Average coulombic efficiency | Capacity retention rate after 100 cycles | Number of cycles |
| Example 1 | 72.2% | 72.2% | 1200 | 10.13 | 1.79 | 99.59% | 97.00% | 362 |
| Example 2 | 70.0% | 70.0% | 1185 | 10.12 | 1.76 | 99.61% | 96.20% | 346 |
| Example 3 | 68.7% | 68.7% | 1183 | 10.11 | 1.74 | 99.51% | 96.00% | 331 |
| Example 4 | 67.5% | 67.5% | 1183 | 10.01 | 1.72 | 99.42% | 95.60% | 308 |
| Example 5 | 63.5% | 63.5% | 1180 | 9.98 | 1.69 | 99.21% | 94.78% | 284 |
| Example 6 | 82.0% | 82.0% | 1221 | 10.14 | 1.81 | 99.63% | 96.82% | 351 |
| Example 7 | 72.2% | 72.2% | 1185 | 9.91 | 1.73 | 99.15% | 95.50% | 327 |
| Example 8 | 72.2% | 72.2% | 1190 | 10.22 | 1.77 | 99.26% | 96.00% | 339 |
| Example 9 | 72.2% | 72.2% | 1198 | 10.11 | 1.69 | 99.52% | 95.30% | 297 |
| Example 10 | 72.2% | 72.2% | 1195 | 10.03 | 1.71 | 99.48% | 96.00% | 343 |
| Example 11 | 72.2% | 72.2% | 1194 | 10.06 | 1.43 | 99.02% | 94.52% | 328 |
| Example 12 | 72.2% | 72.2% | 1205 | 10.02 | 1.72 | 99.56% | 96.97% | 357 |
| Example 13 | 72.2% | 72.2% | 1156 | 10.14 | 1.80 | 99.54% | 96.00% | 339 |
| Example 14 | 72.2% | 72.2% | 1143 | 10.17 | 1.89 | 99.45% | 95.70% | 335 |
| Example 15 | 72.2% | 72.2% | 1172 | 10.11 | 1.75 | 99.42% | 96.21% | 341 |
| Example 16 | 72.2% | 72.2% | 1153 | 10.16 | 1.80 | 99.57% | 96.62% | 320 |
| Example 17 | 72.2% | 72.2% | 1150 | 10.20 | 1.78 | 99.54% | 95.00% | 319 |
| Example 18 | 72.2% | 72.2% | 1142 | 10.23 | 1.77 | 99.35% | 94.42% | 298 |
| Example 19 | 72.2% | 72.2% | 1142 | 10.01 | 1.73 | 99.49% | 95.79% | 330 |
| Example 20 | 72.2% | 72.2% | 1155 | 10.02 | 1.75 | 99.52% | 96.00% | 332 |
| Example 21 | 72.2% | 72.2% | 1169 | 10.05 | 1.76 | 99.54% | 96.02% | 334 |
| Example 22 | 72.2% | 72.2% | 1182 | 10.07 | 1.79 | 99.60% | 96.21% | 341 |
| Example 23 | 72.2% | 72.2% | 1201 | 10.14 | 1.82 | 99.55% | 96.93% | 349 |
| Example 24 | 72.2% | 72.2% | 1202 | 10.15 | 1.82 | 99.47% | 96.00% | 329 |
| Example 25 | 72.2% | 72.2% | 1205 | 10.15 | 1.83 | 99.40% | 95.91% | 325 |
| Example 26 | 68.6% | 72.2% | 1167 | 10.15 | 1.75 | 99.52% | 99.65% | 371 |
| Example 27 | 60.6% | 72.2% | 1157 | 10.13 | 1.72 | 99.49% | 96.21% | 351 |
| Comparative Example 1 | / | / | 1098 | 10.01 | 1.83 | 98.50% | 93.20% | 197 |
| Comparative Example 2 | / | / | 973 | 9.38 | 1.46 | 98.10% | 91.70% | 164 |
| Comparative Example 3 | 40.8% | 40.8% | 989 | 9.54 | 1.55 | 98.22% | 90.25% | 152 |
| Comparative Example 4 | 72.2% | 72.2% | 1200 | 10.13 | 1.79 | 98.82% | 93.21% | 224 |

It can be seen from Table 1 and Table 2 that the separator obtained by the following can have both good mechanical strength and good ion conductivity: a first coating facing the negative electrode and a second coating facing the positive electrode are arranged on the two surfaces of the porous substrate, respectively, the first coating includes a first particle (a solid-state electrolyte) and the content of the first particle in the first coating is greater than 50 wt%, and the second coating includes a second particle (an inorganic particle capable of reacting with lithium dendrites) and the content of the second particle in the second coating is greater than 50 wt%.

It can also be seen from Table 1 and Table 2 that the separators provided in the embodiments of the present application can allow the battery to have good cycle performance and can effectively reduce the probability of internal short circuits in the battery.

It can also be seen from Table 1 and Table 2 that when the first coating includes a small amount of a third particle (an inorganic particle capable of reacting with lithium dendrites), for example, no more than 10 wt%, in addition to the solid-state electrolyte, the cycle performance of the battery can be further improved.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, other embodiments formed by applying various variations that can be conceived by those skilled in the art to the embodiments and by combining some of the constituent elements of the embodiments are also included within the scope of the present application.

## Claims

1. A separator, wherein the separator comprises a porous substrate and a first coating and a second coating respectively located on two surfaces of the porous substrate, wherein when the separator is used in a battery, the first coating faces a negative electrode and the second coating faces a positive electrode;
the first coating comprises a first particle, the first particle comprises a solid-state electrolyte, and a content of the first particle in the first coating is greater than 50 wt%;
the second coating comprises a second particle, the second particle comprises an inorganic particle capable of reacting with lithium dendrites, and a content of the second particle in the second coating is greater than 50 wt%.

2. The separator according to claim 1, wherein
the content of the first particle in the first coating is greater than or equal to 60 wt%, optionally greater than or equal to 65 wt%, and more optionally 65-85 wt%; and/or
the content of the second particle in the second coating is greater than or equal to 60 wt%, optionally greater than or equal to 65 wt%, and more optionally 65-85 wt%.

3. The separator according to claim 1 or 2, wherein the first coating further comprises a third particle;
optionally, the third particle comprises an inorganic particle capable of reacting with lithium dendrites; and/or
optionally, a content of the third particle in the first coating is greater than 0 and less than or equal to 10 wt%, optionally greater than 0 and less than or equal to 5 wt%; and/or
optionally, a volume distribution particle size Dv50 of the third particle is 0.05-3 µm, optionally 0.1-1 µm.

4. The separator according to any one of claims 1 to 3, wherein the solid-state electrolyte comprises an inorganic solid-state electrolyte;
optionally, an electrical conductivity of the inorganic solid-state electrolyte is greater than or equal to 10⁻⁷ S/cm, more optionally greater than or equal to 10⁻⁴ S/cm.

5. The separator according to claim 4, wherein the inorganic solid-state electrolyte comprises one or more of an oxide-based inorganic solid-state electrolyte, a sulfide-based inorganic solid-state electrolyte, and a halide-based inorganic solid-state electrolyte;
optionally, the oxide-based inorganic solid-state electrolyte comprises one or more of a NASICON-based solid-state electrolyte, a garnet-based solid-state electrolyte, a perovskite-based solid-state electrolyte, and a LISICON-based solid-state electrolyte; and/or
optionally, the sulfide-based inorganic solid-state electrolyte comprises one or more of a sulfide-based crystalline solid-state electrolyte and a sulfide glass solid-state electrolyte.

6. The separator according to claim 4 or 5, wherein the inorganic solid-state electrolyte comprises one or more of lithium titanium phosphate (LiₓTi_{y}(PO₄)₃, 0 < x < 2, 0 < y < 3), lithium aluminum titanium phosphate (LiₓAl_{y}Ti_{z}(PO₄)₃, LATP, 0 < x < 2, 0 < y < 1, 0 < z < 3), lithium aluminum germanium phosphate (LiₓAl_{y}Ge_{z}(PO₄)₃, LAGP, 0 < x < 2, 0 < y < 1, 0 < z < 3), lithium aluminum zirconium phosphate (LiₓAl_{y}Zr_{z}(PO₄)₃, LAZP, 0 < x < 2, 0 < y < 1, 0 < z < 3), lithium aluminum chromium phosphate (LiₓAl_{y}Cr_{z}(PO₄)₃, LACP, 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium lanthanum zirconium oxide (Li₇La₃Zr₂O₁₂, LLZO), lithium lanthanum thallium oxide (Li₅La₃Ta₂O₁₂, LLTA), lithium zinc germanium oxide (Li₁₄ZnGe₄O₁₆), lithium argyrodite electrolyte Li₆PS₅X (X comprises one or more selected from Cl, Br, and I), SiS₂-based glass (LiₓSi_{y}S_{z}, 0 < x < 3, 0 < y < 2, 0 < z < 4), P₂S₅-based glass (LiₓP_{y}S_{z}, 0 < x < 3, 0 < y < 3, 0 < z < 7), Li₃PS₄, Li₇P₃S₁₁, Li₁₀GeP₂S₁₂, and respective doped compounds thereof; optionally, the inorganic solid-state electrolyte comprises one or more of lithium titanium phosphate (LiₓTi_{y}(PO₄)₃, 0 < x < 2, 0 < y < 3), lithium aluminum titanium phosphate (LiₓAl_{y}Ti_{z}(PO₄)₃, LATP, 0 < x < 2, 0 < y < 1, 0 < z < 3), lithium aluminum germanium phosphate (LiₓAl_{y}Ge_{z}(PO₄)₃, LAGP, 0 < x < 2, 0 < y < 1, 0 < z < 3), lithium aluminum zirconium phosphate (LiₓAl_{y}Zr_{z}(PO₄)₃, LAZP, 0 < x < 2, 0 < y < 1, 0 < z < 3), lithium aluminum chromium phosphate (LiₓAl_{y}Cr_{z}(PO₄)₃, LACP, 0 < x < 2, 0 < y < 1, 0 < z < 3), and respective doped compounds thereof.

7. The separator according to any one of claims 1 to 6, wherein the inorganic particle capable of reacting with lithium dendrites comprises an inorganic ceramic particle;
optionally, the inorganic ceramic comprises one or more of aluminum oxide, silicon dioxide, silicon(II) oxide, ferric oxide, triiron tetraoxide, cobalt monoxide, tricobalt tetroxide, tin monoxide, tin dioxide, nickel oxide, iron phosphate, copper oxide, titanium oxide, zirconium oxide, barium oxide, calcium oxide, magnesium oxide, aluminum nitride, silicon nitride, boron nitride, zirconium titanate, barium titanate, and respective modified materials thereof;
more optionally, the inorganic ceramic comprises one or more of aluminum oxide, silicon dioxide, silicon(II) oxide, cobalt monoxide, tricobalt tetroxide, tin monoxide, tin dioxide, nickel oxide, iron phosphate, copper oxide, titanium oxide, and respective modified materials thereof.

8. The separator according to any one of claims 1 to 7, wherein
a volume distribution particle size Dv50 of the first particle is 0.05-3 µm, optionally 0.1-1 µm; and/or
a volume distribution particle size Dv50 of the second particle is 0.5-5 µm, optionally 1-3 µm.

9. The separator according to any one of claims 1 to 8, wherein the first coating further comprises one or more of a first binder, a first dispersant, and a first thickener;
optionally, a mass ratio of the first particle to the first binder is 100:(1-25), more optionally 100:(5-22); and/or
optionally, a mass ratio of the first particle to the first dispersant is 100:(1.0-3.5), more optionally 100:(1.2-2.5); and/or
optionally, a mass ratio of the first particle to the first thickener is 100:(10-30), more optionally 100:(12-26).

10. The separator according to claim 9, wherein
the first binder comprises one or more of a vinylidene fluoride homopolymer and/or copolymer, sodium carboxymethylcellulose, and styrene-butadiene rubber; and/or
the first dispersant comprises one or more of hydrolyzed polymaleic anhydride, polyacrylic acid, an acrylic block copolymer, a polyester block copolymer, a polyethylene glycol polyol, polyethyleneimine, and respective derivatives thereof; and/or
the first thickener comprises one or more of sodium hydroxymethylcellulose, methyl cellulose, hydroxyethyl cellulose, hydroxypropyl methyl cellulose, polyacrylate, polyurethane, and polyether.

11. The separator according to any one of claims 1 to 10, wherein the second coating further comprises one or more of a second binder, a second dispersant, and a second thickener;
optionally, a mass ratio of the second particle to the second binder is 100:(1-25), more optionally 100:(8-22); and/or
optionally, a mass ratio of the second particle to the second dispersant is 100:(0.5-4.0), more optionally 100:(1.0-2.0); and/or
optionally, a mass ratio of the second particle to the second thickener is 100:(5-30), more optionally 100:(10-25).

12. The separator according to claim 11, wherein
the second binder comprises one or more of a vinylidene fluoride homopolymer and/or copolymer, sodium carboxymethylcellulose, and styrene-butadiene rubber; and/or
the second dispersant comprises one or more of hydrolyzed polymaleic anhydride, polyacrylic acid, an acrylic block copolymer, a polyester block copolymer, a polyethylene glycol polyol, polyethyleneimine, and respective derivatives thereof; and/or
the second thickener comprises one or more of sodium hydroxymethylcellulose, methyl cellulose, hydroxyethyl cellulose, hydroxypropyl methyl cellulose, polyacrylate, polyurethane, and polyether.

13. The separator according to any one of claims 1 to 12, wherein
a surface density of the first coating is 9-12 g/m², optionally 10-11.5 g/m²; and/or
a surface density of the second coating is 4-14 g/m², optionally 8-12 g/m².

14. The separator according to any one of claims 1 to 13, wherein a ratio of a thickness of the first coating to a thickness of the second coating is (0.2-5):1, optionally (0.25-4):1.

15. The separator according to any one of claims 1 to 14, wherein
the thickness of the first coating is 1-7 µm, optionally 1.5-6 µm; and/or
the thickness of the second coating is 1-7 µm, optionally 1.5-6 µm; and/or
a total thickness of the separator is 8-25 µm, optionally 8-18 µm.

16. The separator according to any one of claims 1 to 15, wherein
the porous substrate comprises one or more of polyolefin, halogenated polyolefin, polyamide, polyester, and respective derivatives thereof; and/or
a thickness of the porous substrate is 4-15 µm, optionally 5-10 µm.

17. The separator according to any one of claims 1 to 16, wherein the separator satisfies at least one of the following:
(1) a porosity of the separator is 40%-80%, optionally 45%-70%;
(2) a transverse tensile strength of the separator is 1000-1500 kgf/cm², optionally 1100-1300 kgf/cm²;
(3) a peel strength between the first coating and the porous substrate of the separator is 8.9-13.2 N/m, optionally 9.1-11.8 N/m;
(4) a peel strength between the second coating and the porous substrate of the separator is 12.9-20.6 N/m, optionally 13.5-17.8 N/m;
(5) a puncture strength of the separator is 9.60-11.50 N•µm⁻¹, optionally 9.80-10.90 N•µm⁻¹;
(6) an ionic conductivity of the separator at 25 °C is 1.40-2.50 mS•cm⁻¹, optionally 1.60-2.15 mS•cm⁻¹.

18. A battery, comprising a battery cell and a case, wherein the battery cell comprises a positive electrode plate, a negative electrode plate, and the separator according to any one of claims 1 to 17, the first coating of the separator faces the negative electrode plate, and the second coating of the separator faces the positive electrode plate.

19. The battery according to claim 18, wherein the battery cell comprises at least one of a lithium-ion battery cell, a lithium metal battery cell, an anode-free lithium metal battery cell, a lithium-sulfur battery cell, and a lithium-air battery cell.

20. An electric device, comprising the battery according to claim 18 or 19.
